# EUROPEAN PATENT SPECIFICATION

(11) **EP 1 745 263 B1**
(45) Date of publication and mention of the grant of the patent: **23.01.2008**
(21) Application number: 05732835.3
(22) Date of filing: 11.04.2005
(51) Int. Cl.: G01D 11/28, G01D 13/26

(54) **DISPLAY APPARATUS**
ANZEIGEVORRICHTUNG
APPAREIL D'AFFICHAGE

(30) Priority: 29.04.2004 GB 0409555
(43) Date of publication of application: 24.01.2007
(73) Proprietor: Nissan Motor Manufacturing (UK) Ltd., Cranfield, Bedfordshire MK43 0DB (GB)
(72) Inventor: EVANS, Nick Nissan Technical Centre Europe LTD, Bedfordshire, MK43 0DB (GB)
(74) Representative: Holmes, Matthew William
(86) International application number: PCT/GB2005/001396
(87) International publication number: WO 2005/106398

(56) References cited:
- EP-A- 0 351 259
- US-A- 6 025 820
- US-B1- 6 182 601
- US-B1- 6 441 726

## Description

The present invention relates to a display apparatus and particularly, but not exclusively, to an improved form of apparatus for the display of warnings to the driver of a vehicle such as an automobile or the like. The invention finds advantageous application in the field of vehicle combination meters.

Most modern vehicles, in particular automobiles or the like, are provided with sensors which monitor various vehicle parameters and operating conditions. For example, many vehicles have sensors which monitor vehicle speed, engine speed (revolutions), coolant temperature, fuel level, oil pressure, battery charge and other operating parameters. The sensors are arranged to generate, or modify, electrical signals, in dependence on the magnitude of the measured parameter. These signals are then applied, often via the vehicle's wiring harness, to a microcontroller or other control unit.

The microcontroller converts the signals from each sensor into a corresponding drive signal which is then applied to a respective analogue meter for display to the driver of the vehicle. In most vehicles, such meters consist of a plate having an arcuate or semicircular scale or dial printed thereon and a pointer arranged to rotate about a point at the centre of the dial. The pointer is connected to a stepper motor or other driving device which rotates the pointer in dependence on the drive signal generated by the microcontroller. The position of the pointer varies as the drive signal changes, this itself being dependent on the signal supplied by the relevant sensor. The meter is calibrated such that the position of the pointer against the dial indicates the instantaneous value of the corresponding measured parameter.

The meters, of which there may be several, are generally disposed within a housing conventionally known as a combination meter, often shortened to the term "combimeter" which will be used herein. The combimeter is frequently located in or on the vehicle dashboard or instrument panel in a position enabling a clear view thereof by the vehicle occupants. In some vehicles the combimeter is positioned directly behind the steering wheel and is visible to the driver through the spokes of the wheel. In other vehicles, on the other hand, the combimeter is positioned at or towards the centre of the instrument panel, being visible to all vehicle occupants.

In addition to the meters, the combimeters of most vehicles provide separate warning lamps which illuminate to alert the driver when the measured parameter exceeds, or drops below, predetermined upper or lower threshold values. The lamps are connected to the microcontroller which generates and applies a warning signal to the warning lamps when the predetermined threshold level is reached.

The combimeter is usually provided with illumination means in the form of a plurality of lamps or LEDs for illuminating the dials and the pointers. The LEDs are located behind the plate which is partially translucent such that light emitted from the LEDs is transmitted through the plate thereby illuminating the markings of the individual dials. The pointers are usually made from a semitransparent material and light from the LEDs is transmitted into the base of the pointer whence it is internally refracted along the pointer and diffracted from the pointer surface.

Each dial is usually marked to indicate visually the normal operating range of the measured parameters, the upper and lower limits of these ranges being identified by warning bands, often coloured red, which are printed on the dial.

Vehicle combimeters of this type are highly common but suffer from the disadvantage that the cost of providing separate warning lamps in addition to the conventional meters and meter illumination is relatively high. It would be advantageous to provide an apparatus and/or method for displaying information to the driver of a vehicle which addresses or alleviates the disadvantages of the prior art devices. Embodiments of the invention provide an improved display apparatus and a vehicle including such a display apparatus. US 6,025,820 discloses an instrument panel having analogue gauges with pointers illuminated independently of the light source illuminating the scale indicia. US 6,441,726 discloses a configurable warning system for a vehicle instrument cluster. US 8,182,601 discloses a meter with microprocessor control of a pointer and multi-status indicator.

According to the present invention there is provided a display apparatus for a vehicle comprising: a dial, a pointer movable relative to the dial, first illumination means for selectively illuminating the dial, second illumination means for selectively illuminating the pointer and control means for controlling the second illumination means in dependence on the measured value of a first vehicle parameter; and characterised in that the control means is arranged to cause the second illumination means to flash at a first predetermined rate when the measured value of the first vehicle parameter reaches or exceeds a first threshold value and to vary the first predetermined rate in dependence on the extent by which the measured value of the first vehicle parameter exceeds the first threshold value.

By controlling the operation of the second illumination means in dependence on the measured value of the first parameter, the occupants of the vehicle can be alerted if the measured value falls outside normal operating ranges for the parameter.

The control means may be arranged to control the second illumination means independently of the first illumination means.

The control means may be arranged to cause the second illumination means to flash at a second predetermined rate when the measured value of the first vehicle parameter reaches or falls below a second predetermined value. In addition, the control means may be arranged to vary the second predetermined rate in dependence on the extent by which the measured value of the first vehicle parameter falls below the second threshold value.

The first and second predetermined rates may be the same or may be visibly different. Alternatively, the control means may be arranged to vary the flash rate in dependence on the extent by which the measured value exceeds or falls below the first and second predetermined values, respectively.

In one embodiment, the control means is arranged vary an illumination signal applied to the second illumination means in order to adjust further the intensity of light emitted in dependence on the measured value of the first vehicle parameter. For example, the control means may be arranged to adjust the intensity of light emitted by the second illumination means when the measured value of the first vehicle parameter exceeds or falls below upper and lower threshold limits, respectively.

In one embodiment, the second illumination means comprises a light source capable of emitting a plurality of colours and wherein the control means is arranged to cause the light source to additionally emit a different colour in dependence on the extent by which the measured value of the first vehicle parameter value exceeds or falls below the first and second threshold values, respectively. The control means may thus control the second illumination means to change the colour of light emitted thereby when measured value of the first vehicle parameter exceeds or falls below upper and lower threshold limits, respectively. Alternatively, or in addition, the control means may be arranged to vary the colour of light emitted by the second illumination means in dependence on the extent by which the measured value exceeds or falls below the upper and lower threshold limits, respectively.

In one embodiment, the pointer is movable relative to the dial in dependence on the measured value of the first vehicle parameter. In another embodiment, the pointer is movable relative to the dial in dependence on the measured value of a second vehicle parameter.

The aspects, embodiments or variations of the invention described in the preceding paragraphs may be used or implemented individually or in combination and no limitation of the invention is intended by any failure to mention a particular combination thereof. The scope of the invention is limited only by the claims appended hereto.

The present invention will now be described, by way of example only, with reference to the accompanying drawings in which:
Figure 1 illustrates a known display apparatus for a vehicle;
Figure 2 is a cross section through the apparatus of Figure 1;
Figure 3 is a block schematic diagram of a control system for the apparatus of Figure 1;
Figure 4 is a block schematic diagram of an apparatus embodying the invention; and
Figure 5 illustrates a display apparatus embodying the invention in use.

Throughout the drawings, as far as possible, like reference numerals indicate like parts.

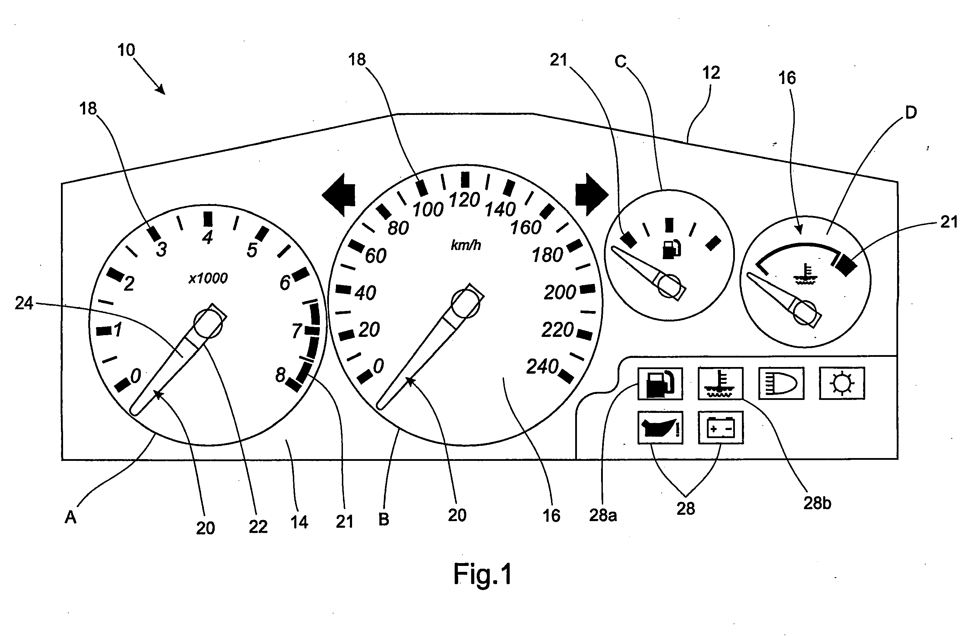

Referring firstly to Figure 1, a known vehicle display apparatus, in the form of a combimeter, is shown generally at 10. The combimeter 10 consists of a back plate 12 formed from a relatively rigid plastics material, such as polypropylene or polyurethane, and having a front face 14 defining a dial face. The combimeter 10 is provided with a number of meters A - D, each representative of a specific vehicle parameter or operating condition. In the illustrated arrangement, the combimeter 10 is provided with four meters for indicating, respectively and from left to right, engine speed (meter A), vehicle speed (meter B), fuel level (meter C) and coolant temperature (meter D). It will be appreciated, however, that the combimeter 10 illustrated in Figure 1 is merely one possible arrangement and that other vehicle combimeters may be provided with a greater or lesser number of meters.

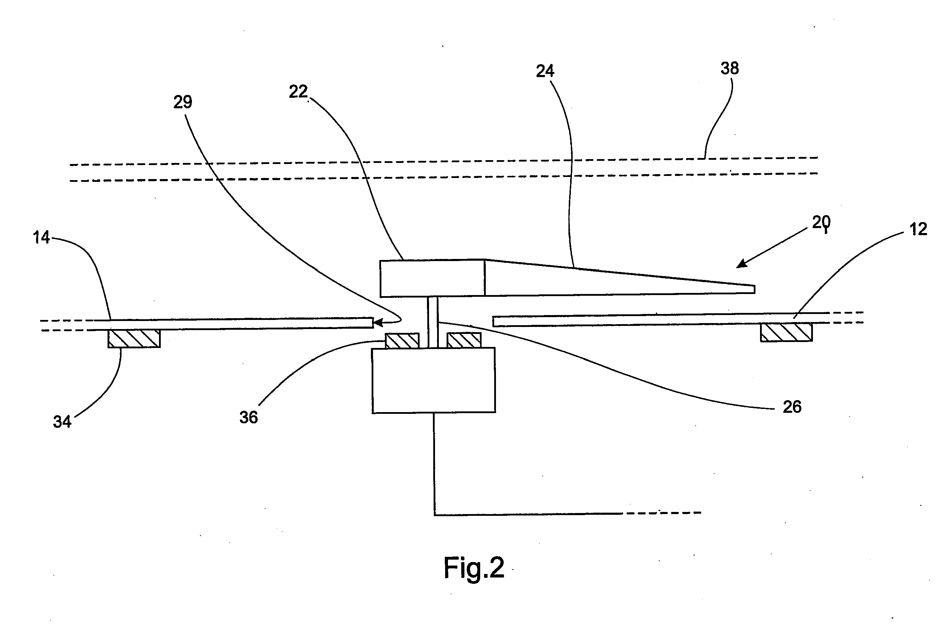

Each meter consists of an arcuate or semicircular dial, defined by a plurality of markings or graduations 18 which are printed onto the dial face 14, and a needle or pointer 20. The markings 18 and the pointer 20 are generally translucent for reasons described below. The pointer 20 includes a root portion 22 and an elongate pointer portion 24 extending from the root portion. The root portion 22 of each pointer 20 is rotatably mounted to the dial face 14, in spaced relationship, by means of a respective shaft or spigot 26 (best illustrated in Figure 2) such that it is able to sweep across the surface of the dial, as described below.

Some or all of the dials 16 are provided with additional coloured markings 21 indicating upper and lower limits for the relevant parameters. For example, the tachometer A is provided with such markings on the scale at positions corresponding to engine speeds above 6500 rpm, this representing a upper limit for engine speed. The markings 21 are often in red (denoting an upper limit) or blue (denoting a lower limit) and are printed onto the dial face 14 using conventional methods.

In addition to the dials 16 and their respective pointers 20, the combimeter 10 includes a plurality of warning indicators or lamps 28 disposed about the dial face 14 in a position which is easily visible to the vehicle driver. In the illustrated example, two of the warning lamps 28a, 28b are arranged to indicate a warning condition for low fuel level and high coolant temperature. In other words, these particular lamps indicate warning conditions for the same parameters indicated by the meters C and D. The remaining warning lamps 28 , are arranged to indicate other vehicle conditions such as whether or not the vehicle headlamps are switched on and whether the oil level or battery charge has reached a critical level.

Referring next to Figure 2, this illustrates a cross section through one of the dials 16 of the combimeter 10 shown in Figure 1. The shaft 26 extends through an aperture 29 in the back plate 12 and connects the root portion 22 of the pointer 20 on the front surface 14 of the plate 12 to drive means in the form of a stepper motor 32 mounted to the rear surface of the plate 12. The stepper motor 32 is arranged to rotate the shaft in stepped increments, in dependence on an electrical signal applied thereto, thereby to cause the pointer 20 to rotate correspondingly around the dial 16.

Each dial 16 also includes illumination means for illuminating the markings or graduations 18 and the pointer 20. Specifically, the apparatus includes dial illumination means in the form of one or more LEDs 34 (dial LEDs) which are disposed on the rear side of the back plate and arranged to emit light on application of electrical power thereto. Since the markings or graduations 18 are partially translucent, light from the dial LEDs 34 is able to pass through, thereby effectively illuminating the dials 16. In the illustrated embodiment, the first illumination means consists of a plurality of dial LEDs located in an arc which corresponds to the position of the graduations 18. The number of LEDs used is arbitrary, but typically varies between 5 and 20. Each LED covers a "zone" which may include one, or more than one, graduation. The remainder of the dial plate is substantially opaque so that only the graduations are illuminated.

The apparatus also includes second illumination means in the form of a plurality of LEDs 36 (pointer LEDs) which are disposed, in discrete units or banks, around the shaft 26. Light from the pointer LEDs 36 is able to pass through the aperture 29 and is transmitted into the root portion 22 of the pointer 20 which, being formed from translucent material, acts as a light guide. Thus, light is refracted within the pointer 20, in known manner, from the root portion 22 along the pointer portion 24 causing the illumination thereof.

In this way, it can be seen that both the dial and the pointer can be illuminated whilst the remainder of the dial face remains unlit.

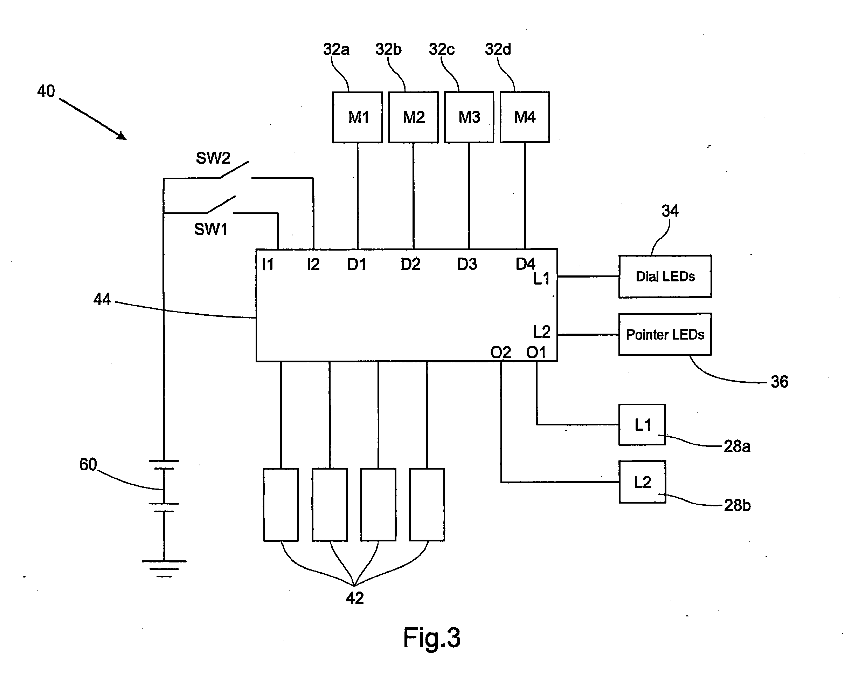

Referring next to Figure 3 this illustrates, in block schematic form, a control system for the apparatus of Figure 1. The system, referred to generally at 40, consists of a plurality of sensors 42 which are arranged to monitor or sense a respective vehicle parameter or operating condition. In the illustrated embodiment, the control system has four sensors for measuring, respectively, engine speed (engine revolutions), vehicle speed, coolant temperature and fuel level. It will be appreciated that some vehicles will possess greater or fewer sensors.

It will be understood that, in general, each sensor 42 is arranged to sense or measure the respective operating parameter and to generate, or modify, an electrical signal (hereafter termed a "sense signal") in dependence on the instantaneous value of the measured parameter. The sense signals generated by the sensors 42 are applied, via the vehicle's wiring harness 43, to control means in the form of a microcontroller 44. The types of sensors employed for the measurement of these operating parameters will be well understood by those skilled in the art and further details of their method of operation are not included herein.

The microcontroller 44 has a plurality of drive outputs D1 - D4, each connected to a respective one of the stepper motors 32a - 32d of the meters A - D. The microcontroller 44 is arranged to receive the sense signals generated by the sensors 42 and to convert them into drive signals which are applied to the drive outputs D1- D4 for driving the stepper motors 32a - 32d associated with the relevant dials, as described above.

The microcontroller 44 is also connected to the dial LEDs 34 and to the pointer LEDs 36 by respective outputs L1, L2. The microcontroller 44 is arranged selectively to generate an illumination signal, in the form of an appropriate electrical voltage, and apply this to the LEDs 34, 36 via the outputs L1, L2 thereby to illuminate the LEDs 34, 36. It will be seen that the microcontroller 44 is connected to the dial LEDs 34 by a single common output L1. Consequently, when the illumination signal is applied to the output L1 by the microcontroller 44, all of the dial LEDs 34, and hence all of the dials 16, are illuminated simultaneously. It is not possible to illuminate individual dials with this arrangement.

Similarly, the microcontroller 44 is connected to the pointer LEDs 36 by a single common output L2. Consequently, when the illumination signal is applied to the output L2 by the microcontroller 44, all of the pointer LEDs 36 are illuminated simultaneously. It is not possible to illuminate individual pointers with this arrangement.

A first input 11 of the microcontroller 44 is connected to the ignition switch SW1 of the vehicle for supplying power thereto from the vehicle battery 60. When the vehicle ignition switch SW1 is open, no power is supplied to the microcontroller 44 and thus the drive signals are not generated.

A second input I2 of the microcontroller 44 is connected to a switch SW2 for operating the vehicle's headlamps. When this switch SW2 is moved to the "on" position by the driver, thereby to turn on the vehicle headlamps, the microcontroller 44 generates the required illumination signal on the outputs L1, L2, thereby illuminating the dials 16 and the pointers 20 as described above. The arrangement is such that it is generally not possible to illuminate the dials and pointers when the vehicle headlamps are not switched on.

It should be noted, however, that in some vehicles the glass or plastic window 38 (Figure 2) covering the dial face 14 is smoked or tinted. To ensure that the dials are visible to the driver, it is necessary to illuminate the dial LEDs 34 and the pointer LEDs 36 at all times, even in daylight and when the vehicle headlamps are switched off. In such arrangements, the microcontroller 44 is often arranged to reduce the intensity of the light emitted by the dial LEDs 34 and the pointer LEDs 36 and hence dim the illumination of the dials 16 and pointers 20. This may be achieved by reducing the voltage of the signal applied to the outputs L1, L2 or by using a form of modulation such as pulse width modulation, as would be well understood by the skilled person.

The microcontroller 44 also has a number of further outputs which are connected to the warning lamps 28. In the illustrated example, the microcontroller 44 is shown having two such outputs O1, O2 which are connected, respectively, to the warning lamps 28a, 28b. For the combimeter of Figure 1, the microcontroller 44 has 6 such outputs, one connected to each warning lamp 28, but these additional outputs are not shown for clarity.

As described above, when the sense signal generated by a sensor 42 exceeds, or falls below, a predetermined threshold level, the microcontroller 44 applies the illumination signal to the relevant output O1, 02 to illuminate the corresponding warning lamp 28. This provides an indication to the driver that one of the operating conditions or parameters of the vehicle has exceeded, or fallen below, normal or safe levels and that attention may be required.

For example, if the sense signal generated by the fuel level sensor 42 indicates that the remaining fuel in the tank has dropped below the predetermined threshold level, say 5 litres, the microcontroller 44 generates the required voltage on the output 01 which causes the low fuel warning lamp 28a to illuminate.

This type of combimeter arrangement, whilst being highly common for automotive applications, suffers from the disadvantage that it can be relatively expensive to produce. The applicant has identified that a reduction in the cost of manufacture of such arrangements may be achieved by deletion of various features.

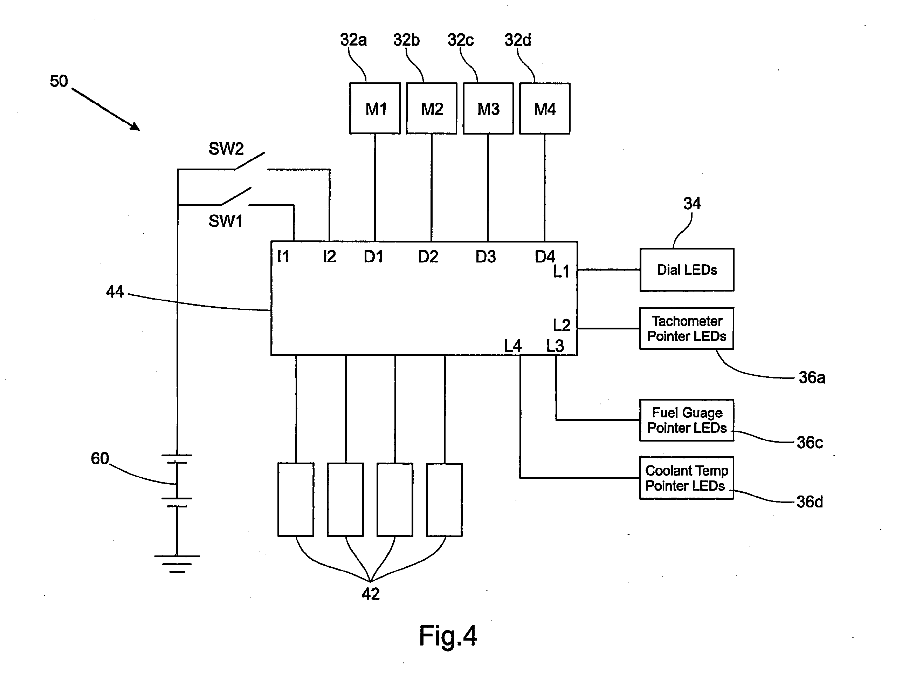

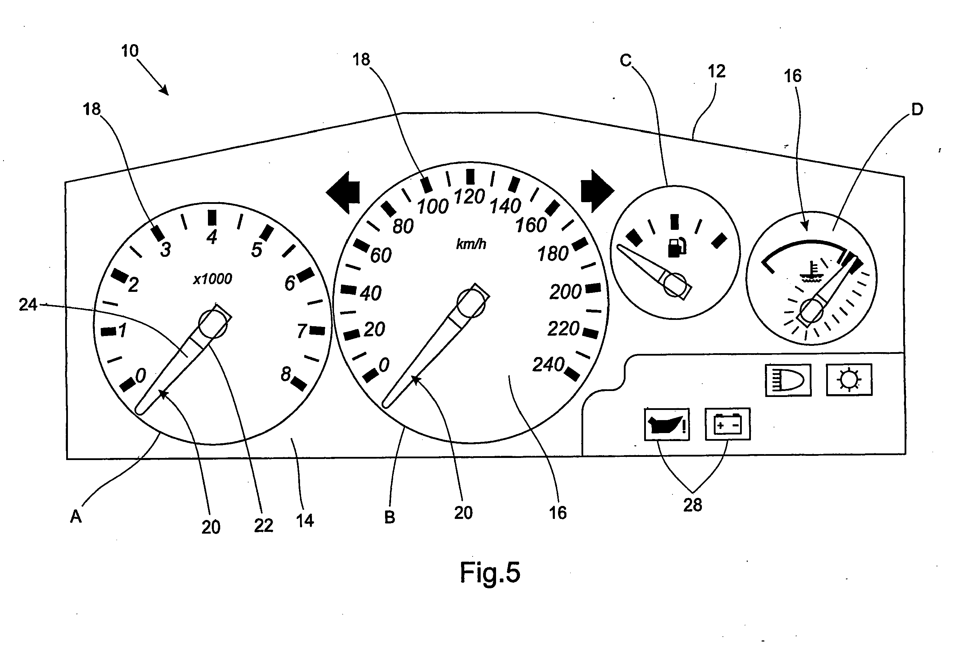

Referring now to Figure 4 this illustrates, in block schematic form, a control system 50 for an apparatus embodying the present invention. As with the system illustrated in Figure 3, the illustrated system 50 comprises a microcontroller 44 associated with the combimeter (shown in Figure 5) which is connected to a plurality of sensors 42 for monitoring or measuring various vehicle parameters or operating conditions.

The microcontroller 44 has a plurality of drive outputs D1 - D4, each of which is connected to a respective stepper motor 32a -32d for driving the pointers 20 of the corresponding dial 16 in dependence on the sense signal generated by the relevant sensor 42. The output L1 of the microcontroller 44 is connected to the dial LEDs 34 for applying a voltage thereto in order to illuminate the dials 16 in dependence on the condition of the vehicle headlamp switch SW2. Again, the dial LEDs 34 are supplied with power from a common output L1 so that it is not possible to illuminate any of the dials individually.

A significant difference between the system 50 of Figure 4 and the prior art system of Figure 3 is that the microcontroller 44 is connected to the pointer LEDs 36 of three of the dials 16 via individual outputs L2 - L4, rather than through a common output L2. It will be appreciated, therefore, that the system 50 permits the microcontroller 44 to control the illumination of the pointers 20 for three of the meters (in this case the tachometer A, the fuel gauge C and the coolant temperature meter D) individually.

Furthermore, in the illustrated embodiment, the apparatus no longer has the warning lamps 28a, 28b, for reasons described below.

In use, the sensors 42 monitor individual vehicle operating conditions and parameters substantially continuously and generate the sense signals in dependence on the measured value of the relevant parameter. Each sense signal is applied to the microcontroller 44 which processes the signal and generates a corresponding drive signal for application to the stepper motor 32a - 32d of the relevant meter via the respective output D1 - D4. Each meter A - D is calibrated so that its pointer 20 rotates to the required position on the dial 16 to indicate the measured value of the relevant parameter.

The microcontroller 44 is arranged to apply an illumination signal to the dial LEDs 34 via the output L1 and to the pointer LEDs 36 via the outputs L2 - L4 when the headlamp switch SW2 is switched on, causing them to illuminate. In the illustrated embodiment, the dial LEDs 34 and the pointer LEDs 36 remain unlit until the headlamp switch is switched on.

However, in the event that any of the sensors 42 determines that one of the measured vehicle parameters or operating conditions exceeds, or falls below, a predetermined threshold value or level, the microcontroller 44 is arranged to generate a pulsed illumination signal or voltage on the output L2 - L4 connected to the pointer LEDs 36 for illuminating the pointer 20 of the relevant meter A, C, D. The pulsed voltage applied to the pointer LEDs 36 causes them, and hence the pointer itself, to flash rather than to be constantly illuminated (coolant temperature meter D, Figure 5).

For example, if the sense signal generated by the fuel level sensor 42 indicates that the remaining fuel in the tank has dropped below the predetermined threshold level, say 5 litres, the microcontroller 44 generates a pulsed illumination signal on the output L3 which causes the pointer LEDs 36c for the fuel gauge C, and hence the pointer 20 itself, to flash. The flashing of the pointer 20 alerts the driver that, in this case, the fuel level has fallen below a certain level. There is therefore no need to provide additional warning lamps for this parameter.

In general, therefore, causing the dial pointer 20 to flash when the relevant parameter exceeds, or falls below, desired or safe values removes the need for additional warning lamp. Indeed, in Figures 4 and 5 it can be seen that the warning lamps 28a, 28b have been deleted.

The microcontroller can thus employ the pre-existing outputs O1 and O2 as the outputs L3 and L4 for controlling the pointer LEDs 36c, 36d. It will be appreciated, therefore, that the invention may be implemented with little or no physical change to the microcontroller 44 or circuit architecture of the system 50 since the outputs of the microcontroller 44 normally used to provide power to the warning lamps can be used instead to provide power to individual banks of pointer LEDs.

The deletion of the warning lamps reduces the cost of manufacture of the apparatus, this cost being further reduced by avoiding the need to provide lamp cut-outs in the dial plate. Furthermore, the coloured markings 21 provided on the dials themselves can be removed if desired, further reducing cost

It can be seen that the present invention provides a relatively simple modification to existing combimeter arrangements to provide a display apparatus which provides all of the functionality of the prior art system whilst reducing manufacturing cost.

Nevertheless, a number of variations, modifications or potential improvements to the apparatus of the invention may be possible.

For example, the microcontroller 44 may be arranged to vary the flash rate of the pointer LEDs 36 in dependence on the measured value of the parameter so that the rate increases as the measured value increases further above, or drops further below, the predetermined threshold level. For example, if the coolant temperature reaches the predetermined threshold level, the microcontroller may control the pointer LEDs 36d to flash continuously at a first rate such as 0.5 Hz. If the coolant temperature rises further, the pointer LEDs 36d are caused to flash more rapidly, such as at 1 Hz to 4 Hz.

In addition, or alternatively, the duty cycle of the flashing may be varied depending on the measured value of the parameter. For example, if the level of fuel as measured by the fuel gauge sensor 42 drops below a first predetermined threshold level, the fuel gauge pointer LEDs 36c may be controlled to flash at, say, a 1/60 duty cycle, the pointer LEDs flashing rapidly on and off approximately once every minute. This ratio may be increased as the fuel level reduces further until at critical levels, the pointer LEDs are flashing with a 1/1 duty cycle at, say, approximately 0.5 to 4 Hz.

Additionally or alternatively, the microcontroller 44 may be arranged to vary the illumination signal applied to the pointer LEDs 36 in dependence on the measured value of the parameter in such a way that the intensity of light emitted by the pointer LEDs 36 increases as the measured value of the parameter increases further above, or drops further below, the predetermined threshold level.

Additionally or alternatively, the apparatus may employ multi-colour LEDs or the like for the pointer LEDs 36 and the microcontroller 44 may be arranged to vary or change the colour emitted by the pointer LEDs in dependence on the measured value of the parameter.

For example, tri-colour LEDs could be employed for illuminating the pointer 20 of the tachometer A which measures and displays engine speed in terms of revolutions per minute. In this embodiment, the microcontroller 44 may be arranged to cause the pointer LEDs 36a to emit green light when the engine speed is within a predetermined normal operating range, to emit yellow or orange light when the engine speed approaches a predetermined threshold level and then to emit red light when the threshold level is exceeded. The changes in colour may be discrete or gradual, as desired, this being achieved merely by adjusting the illumination signal or voltage applied on the output L2 by the microcontroller 44.

In this manner, it will be appreciated that the apparatus may be used as a so-called "shift light" for advising the driver to change up a gear in order to avoid over-revving the engine and/or to maintain maximum power.

In a similar manner, multi-colour light sources may be used for illuminating the pointer of a vehicle speedometer for indicating vehicle speed. In this case, the pointer LEDs could be controlled to emit green light at speeds below the current speed limit but to emit red light at speeds above the current speed limit. The indicated speed at which the pointer LEDs change from emitting green light to emitting red light may be settable by the user in any suitable manner.

The ability to set the upper and/or lower predetermined threshold levels by the user may extend to all meters.

The invention is applicable both to combimeters which are arranged to illuminate the pointers and dials continuously, irrespective of whether the vehicle headlamps are switched on, and to combimeters which illuminate dials and pointers only when the vehicle headlamps are switched on. In the latter case, it may be sufficient when the vehicle headlamps are switched off (i.e. during daylight) merely for the microcontroller to cause the relevant pointer LEDs to illuminate constantly when the predetermined threshold level of the measured parameter is reached or exceeded. It will be appreciated that the sudden illumination of a previously unlit pointer may be sufficient to alert the driver of the critical level of the measured parameter.

On the other hand, when the vehicle headlamps are switched on so that all pointers and dials are illuminated, the microcontroller 44 may then be arranged to revert to using the previously described methods of alerting the driver by varying the illumination status of the relevant pointed LEDs, for example by flashing at different rates and/or varying the intensity of light emitted thereby and/or the colour thereof.

In some instances, it may be undesirable for the pointer LEDs to flash between a fully on state and a fully off state since, during the fully off state, the pointer may become difficult to see, especially when ambient light is low. In this case, the pointer LEDs 36 may be arranged to flash between a high intensity and a lower intensity, this being sufficient to alert the driver to the warning but ensuring that the pointer is still visible to the driver at all times.

In another embodiment, there may be provided two discrete sets of pointer LEDs 36 for each pointer. One set is arranged to illuminate the pointer portion of the pointer substantially continuously, or in dependence on the state of the corresponding dial LEDs. The other set may be arranged to illuminate only the root or hub portion of the pointer and this set can be used to provide the warning, either by being made to flash, to change intensity or to change colour, as described above. In this case, the junction between the root portion and the pointer portion may include means for preventing the light from the pointer portion illuminating the root portion.

It will be appreciated that, where the combimeter includes more than one meter, as is frequently the case, then different illumination methods may be used for different meters. For example, the pointer LEDs 36a for the tachometer A may be arranged to change colour, as described above, whilst the pointer LEDs 36d for the coolant temperature meter D may be arranged to alter flash frequency or duty cycle.

Equally, different illumination methods (flashing, changing intensity, changing colour etc.) may be employed for the same meter, depending on circumstances. For example, it may be desirable in some instances to cause the pointer LEDs 36 to flash for a predetermined period of time, to alert the driver to the warning, but then to revert to a state where they are constantly illuminated. Alternatively, the pointer LEDs 36 may be made to flash for a predetermined period of time, but then to change colour and remain constantly illuminated. Since this requires only programming of the microcontroller, any combination of the above described illumination methods may be employed.

In the event that the microcontroller does not have sufficient outputs to permit individual pointer LEDs 36 to be controlled by a separate output, the microcontroller may be programmed to multiplex the illumination signals onto one output line and the system may be provided with a demultiplexer or the like to split the signal into the required number of channels for application to individual pointer LEDs.

It is also envisaged that the control means may be arranged to control the pointer LEDs in dependence on a *different* vehicle parameter to that on which movement of the pointer is dependent. For example, illumination of the pointer LEDs for the pointer of the vehicle speedometer, movement of which is controlled by the control unit in dependence on the vehicle speed, may be controlled in dependence on the rate of engine revolutions. In this case, the colour of light emitted by the speedometer pointer LEDs, or a flashing rate thereof, may be varied as the engine speed increases *independently* of vehicle speed. In this manner, the functions of displaying vehicle speed and engine speed may be combined in a single instrument.

In a variation of the above, the pointer LEDs may be illuminated only when the measured value of the parameter exceeds a threshold level. In this case, for example, the pointer LED could be illuminated when the engine speed reaches an optimum speed for gear change, thereby acting as a so-called shift light.

Other such combinations of instruments may be chosen as desired and may operate in any of the ways mentioned above.

It will be appreciated that most embodiments of the invention require the provision of no additional parts over existing known combimeters and, apart from the connecting of the outputs to the pointer LEDs, implementation of the invention requires only reprogramming of the software for controlling the microcontroller.

Use of the term "dial" herein is not intended to be limiting and includes both curved scales, where the pointer rotates about a fixed axis, and non-curved (e.g. straight) scales where the pointer moves substantially linearly between graduations.

The invention permits the independent controlling of the pointer LEDs 36 by the microcontroller 44 in dependence on the measured value of a given vehicle parameter or operating condition. Advantageously, the controlling of the illumination of the pointer LEDs by the control unit 44 in dependence on the measured value of the parameter (rather than on, say, the angular position of the pointer) means that the relevant information or warning can be displayed to the driver even if the stepper motor or other drive to the pointer fails. Furthermore, conventional warning lights and markings on the dial can be deleted, thereby significantly reducing the manufacturing cost of the combimeter.

## Claims

1. A display apparatus for a vehicle comprising:
a dial (16),
a pointer (20) movable relative to the dial,
first illumination means (34) for selectively illuminating the dial (16),
second illumination means (36) for selectively illuminating the pointer (20) and
control means (44) for controlling the second illumination means (36) in dependence on the measured value of a first vehicle parameter; and
**characterised in that**
the control means (44) is arranged to cause the second illumination means (36) to flash at a first predetermined rate when the measured value of the first vehicle parameter reaches or exceeds a first threshold value and to vary the first predetermined rate in dependence on the extent by which the measured value of the first vehicle parameter exceeds the first threshold value.

2. An apparatus as claimed in claim 1, wherein the control means (44) is arranged to cause the second illumination means (36) to flash at a second predetermined rate when the measured value of the first vehicle parameter reaches or falls below a second threshold value.

3. An apparatus as claimed in claim 2, wherein the control means (44) is arranged to vary the second predetermined rate in dependence on the extent by which the measured value of the first vehicle parameter falls below the second threshold value.

4. An apparatus as claimed in any of claims 1 to 3, wherein the control means (44) is arranged vary an illumination signal applied to the second illumination means (36) in order to adjust further the intensity of light emitted in dependence on the measured value of the first vehicle parameter.

5. An apparatus as claimed in any of claims 1 to 4, wherein the second illumination means (36) comprises a light source capable of emitting a plurality of colours and wherein the control means (44) is arranged to cause the light source to additionally emit a different colour in dependence on the extent by which the measured value of the first vehicle parameter value exceeds or falls below the first and second threshold values, respectively.

6. An apparatus as claimed in any preceding claim, wherein the pointer (20) is movable relative to the dial (16) in dependence on the first vehicle parameter.

7. An apparatus as claimed in any of claims 1 to 5, wherein the pointer (20) is movable relative to the dial (16) in dependence on a second vehicle parameter.

## Patentansprüche

1. Anzeigevorrichtung für ein Fahrzeug, die Folgendes umfasst:
eine Skalenscheibe (16),
einen relativ zu der Skalenscheibe bewegbaren Zeiger (20),
ein erstes Beleuchtungsmittel (34) zum selektiven Beleuchten der Skalenscheibe (16),
ein zweites Beleuchtungsmittel (36) zum selektiven Beleuchten des Zeigers (20) und
Steuermittel (44) zum Steuern des zweiten Beleuchtungsmittels (36) in Abhängigkeit von dem Messwert eines ersten Fahrzeugparameters; und
**dadurch gekennzeichnet, dass**
das Steuermittel (44) so ausgelegt ist, dass es bewirkt, dass das zweite Beleuchtungsmittel (36) mit einer ersten vorbestimmten Rate blinkt, wenn der Messwert des ersten Fahrzeugparameters einen ersten Schwellwert erreicht oder übersteigt, und die erste vorbestimmte Rate in Abhängigkeit von dem Ausmaß variiert wird, um das der Messwert des ersten Fahrzeugparameters den ersten Schwellwert übersteigt.

2. Vorrichtung nach Anspruch 1, wobei das Steuermittel (44) so ausgelegt ist, dass es bewirkt, dass das zweite Beleuchtungsmittel (36) mit einer zweiten vorbestimmten Rate blinkt, wenn der Messwert des ersten Fahrzeugparameters einen zweiten Schwellwert erreicht oder darunter abfällt.

3. Vorrichtung nach Anspruch 2, wobei das Steuermittel (44) so ausgelegt ist, dass es die zweite vorbestimmte Rate in Abhängigkeit von dem Ausmaß variiert, um das der Messwert des ersten Fahrzeugparameters unter den zweiten Schwellwert abfällt.

4. Vorrichtung nach einem der Ansprüche 1 bis 3, wobei das Steuermittel (44) so ausgelegt ist, dass es ein an das zweite Beleuchtungsmittel (36) angelegtes Beleuchtungssignal variiert, um die Intensität von emittiertem Licht in Abhängigkeit von dem Messwert des ersten Fahrzeugparameters weiter zu verstellen.

5. Vorrichtung nach einem der Ansprüche 1 bis 4, wobei das zweite Beleuchtungsmittel (36) eine Lichtquelle umfasst, die in der Lage ist, mehrere Farben zu emittieren, und wobei das Steuermittel (44) so ausgelegt ist, dass es bewirkt, dass die Lichtquelle zusätzlich eine andere Farbe in Abhängigkeit von dem Ausmaß emittiert, um das der Messwert des ersten Fahrzeugparameterwerts den ersten beziehungsweise zweiten Schwellwert übersteigt oder darunter abfällt.

6. Vorrichtung nach einem der vorhergehenden Ansprüche, wobei der Zeiger (20) relativ zu der Skalenscheibe (16) in Abhängigkeit von dem ersten Fahrzeugparameter bewegt werden kann.

7. Vorrichtung nach einem der Ansprüche 1 bis 5, wobei der Zeiger (20) relativ zu der Skalenscheibe (16) in Abhängigkeit von einem zweiten Fahrzeugparameter bewegt werden kann.

## Revendications

1. Appareil d'affichage pour véhicule comprenant :
un cadran (16),
un pointeur (20) déplaçable par rapport au cadran,
un premier moyen d'éclairage (34) pour éclairer sélectivement le cadran (16),
un deuxième moyen d'éclairage (36) pour éclairer sélectivement le pointeur (20) et
un moyen de commande (44) pour commander le deuxième moyen d'éclairage (36) en fonction de la valeur mesurée d'un premier paramètre de véhicule ; et **caractérisé en ce que**
le moyen de commande (44) est agencé pour amener le deuxième moyen d'éclairage (36) à clignoter à une première cadence prédéterminée quand la valeur mesurée du premier paramètre de véhicule atteint ou dépasse une première valeur de seuil et faire varier la première cadence prédéterminée en fonction du degré de dépassement de la première valeur de seuil par la valeur mesurée du premier paramètre de véhicule.

2. Appareil selon la revendication 1, dans lequel le moyen de commande (44) est agencé pour amener le deuxième moyen d'éclairage (36) à clignoter à une deuxième cadence prédéterminée quand la valeur mesurée du premier paramètre de véhicule atteint ou chute en dessous d'une deuxième valeur prédéterminée.

3. Appareil selon la revendication 2, dans lequel le moyen de commande (44) est agencé pour faire varier la deuxième cadence prédéterminée en fonction du degré de chute de la valeur mesurée du premier paramètre de véhicule en dessous de la deuxième valeur de seuil.

4. Appareil selon l'une quelconque des revendications 1 à 3, dans lequel le moyen de commande (44) est agencé pour faire varier un signal d'éclairage appliqué au deuxième moyen d'éclairage (36) afin de régler davantage l'intensité de la lumière émise en fonction de la valeur mesurée du premier paramètre de véhicule.

5. Appareil selon l'une quelconque des revendications 1 à 4, dans lequel le deuxième moyen d'éclairage (36) comprend une source de lumière capable d'émettre une pluralité de couleurs et dans lequel le moyen de commande (44) est agencé pour amener la source de lumière à émettre de plus une couleur différente en fonction du degré de dépassement ou de chute de la valeur mesurée du premier paramètre du véhicule par rapport aux première et deuxième valeurs de seuil, respectivement.

6. Appareil selon l'une quelconque des revendications précédentes, dans lequel le pointeur (20) est déplaçable relativement au cadran (16) en fonction du premier paramètre de véhicule.

7. Appareil selon l'une quelconque des revendications 1 à 5, dans lequel le pointeur (20) est déplaçable par rapport au cadran (16) en fonction d'un deuxième paramètre de véhicule.
